# EUROPÄISCHE PATENTANMELDUNG

(11) **EP 4 473 828 A1**
(43) Veröffentlichungstag der Anmeldung: **11.12.2024**
(21) Anmeldenummer: 24176138.6
(22) Anmeldetag: 15.05.2024
(51) Int. Cl.: A01J 25/12

(54) **AUSBLAS-KASSETTE ZUR AUFNAHME VON KÄSEFORMEN**

(30) Priorität: 07.06.2023 CH 6002023
(71) Anmelder: Kalt Maschinenbau AG, 9604 Lütisburg (CH)
(72) Erfinder: Grüninger, Siegfried, 9011 St. Gallen (CH)
(74) Vertreter: Wenzel Nemetzade Warthmüller Patentanwälte Part mbB

(57) **Zusammenfassung**

Die Erfindung betrifft eine Ausblas-Kassette zur Aufnahme von Käseformen, wobei die Ausblas-Kassette insbesondere in einer Käsepresse anordenbar ist. Eine solche Käsepresse dient dem Abpressen von Käserohmasse. Die Ausblas-Kassette (1) und/oder die Käseform (4, 6) soll einfach und rasch reinigbar sein. Sie umfasst dazu zumindest eine Tragstruktur, sie selbst und/oder die Käseformen (4, 6) weisen ein perforiertes Form Mantelblech (9, 9') und einen perforierten Boden (10, 10') auf. Die Ausblas-Kassette (1) ist erfindungsgemäß mit einem offenen Boden versehen.

## Beschreibung

Die Erfindung betrifft eine Ausblas-Kassette zur Aufnahme von Käseformen, wobei die Ausblas-Kassette insbesondere in einer Käsepresse anordenbar ist. Eine solche Käsepresse ist insbesondere eine Kassettenpresse zum Abpressen von Käserohmasse.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Käseformen, ein Säulengestell zur Anordnung eines heb- und senkbaren Presskopfes und eines Verteilkopfes zur Zuführung und Dosierung der Käserohmasse in die Käseformen und einen, auf der Wanne verfahrbaren Portalwagen zur Führung des Verteilkopfes und zur Handhabung eines Wendemechanismus' für die Käseformen. Der Verteilkopf muss manuell bereitgestellt resp. gewechselt werden. Der Verteilkopf beinhaltet ein Zuführrohr vom Käsefertiger und ein waagerechtes Verteilrohr mit einer Anzahl an Dosierapparaten zur Dosierung der Käserohmasse in die Käseformen. Zusätzlich kann die dosierte Käserohmasse mit einem Balken oder Rakel in die Käseformen befördert werden.

Die Käserohmasse gelangt über ein Zuführrohr, dessen Enden am Kessel eines Käsefertigers bzw. am Verteilkopf angeschlossen sind, in den Verteilkopf und von da in die runden oder eckigen Formen, die in der Wanne der Kassettenpresse angeordnet sind.

Die EP-A-406899 zeigt eine Weiterbildung einer solchen Vorrichtung, bei der die Formen in Kassetten aufgenommen sind, die wiederum kompakt und reihenartig in der Wanne angeordnet sind.

Eine Weiterentwicklung der Zuführung mit einer Gelenkrohranordnung ist in der CH 715264 A2, die eine höhere Dosiergenauigkeit ermöglichen soll, offenbart.

Die eigentliche Käseform kann dabei von einem topfförmigen Mantel mit einem Luftzufuhrkanal umgeben sein (EP 1269832 B1). Dadurch wird ein Luftkanal gebildet und durch die zugeführte Luft kann die an den Sieblöchern des Lochblechs der Form anhaftende Käsemasse nach dem Pressen von der Jerbseite gelöst werden.

Nach der EP-B-543185 ist ein Form- bzw. Pressdeckel über eine Kippeinrichtung mit dem Pressstempel verbindbar (selbstzentrierend), so dass infolge möglicher Kippbewegungen ein Ansaugen des Formdeckels an der Käsemasse vermieden wird. Die Form selbst ist rund oder viereckig und kann aus einem äusseren Behälter und einem inneren, gelochten Mantel bestehen.

Die BR 9300409 offenbart eine Käseform mit doppelter Wandung, die mit, an ihrem Boden kreuzenden, Rippen versehen ist.

In der US 3838955A ist eine Form zur Herstellung von Cheddar offenbart, die eine Käseform und einen Pressdeckel aufweist. Die Form und insbesondere der Pressdeckel sind massiv ausgeführt. Der Pressdeckel sowie der Boden der Form sind mit wenigen Löchern 5 zum Abfluss von Molke versehen.

Eine weitere Käseform mit einer perforierten Formwand aus Metall ist in der DE-B-1030612 offenbart. Diese Formwand weist an ihrer inneren Oberfläche gleichmäßig verteilte, niedrige Erhöhungen und Vertiefungen bis ca.1 mm auf, die die Käserinde bei Entnahme des Käselaibs nicht beschädigen sollen, selbst wenn der Käse aus der Form geschlagen wird.

Eine solche Käseform mit perforierter Wandung kann nach DE-C-2823182 auch aus Kunststoff bestehen, an deren Innenseite zueinander parallele Riefen mit dreieckigem Querschnitt vorgesehen sind.

Bekannt ist weiterhin eine Käseform gemäß EP 2710889 A1, insbesondere zur Anordnung in einer Kassettenpresse, wobei ein Boden der Käseform bis in den Übergangsbereich der äußeren Mantelwand hinein mit einer Rippenstruktur versehen ist. Diese Käseform kann aus Metall oder Kunststoff, insbesondere jedoch aus einem rostfreien Stahl bestehen.

Den beschriebenen Käseformen ist gemeinsam, dass der in ihr abgepresste Rohkäsemasse zum Ankleben an Mantelwand und Boden neigt.

Bekannt sind auch Kassetten für Käseformen, die mit Ausblasdüsen einer Ausblaseinrichtung koppelbar sind, wie in der CH 704208 A2 offenbart. Hierbei setzt die Ausblaseinrichtung mit den Ausblasdüsen auf der Unterseite der Kassette auf und mittels Luft und Schwerkraft werden die Käselaibe aus den Käseformen entformt und auf einer Fördereinrichtung oder einem Ablagetisch zur weiteren Verarbeitung abgesetzt.

Danach fährt die Ausblaseinrichtung wieder nach oben in ihre Ruheposition, die Kassette wird in die Ausgangsstellung gedreht, von einer Handhabungseinrichtung aufgenommen und verfahren.

Der untere Bereich der Kassette ist von einer Pfanne mit Löchern im Boden umhüllt. Zwischen der Pfanne und dem perforierten Mantel der Käseform besteht ein Hohlraum, der allerdings schlecht reinigbar ist. Durch die Löcher wird die Luft zum Entformen der Käselaibe eingeblasen, im Hohlraum entsteht ein Überdruck, welcher durch die Perforation auf den Käselaib wirkt und diesen schlussendlich von der Käseform ablöst.

Der Erfindung liegt nun die Aufgabe zugrunde, die Nachteile des Standes der Technik zu vermeiden und eine Ausblas-Kassette zur Aufnahme von mindestens einer Käseform, bevorzugt mehreren Käseformen bereitzustellen, wobei die Kassette vorteilhaft in einer Käsepresse anordenbar ist. Eine solche Käsepresse ist insbesondere eine Kassettenpresse zum Abpressen von Käserohmasse.

Die Ausblas-Kassette soll besser einsehbar und reinigbar sein und hohen Hygieneansprüchen genügen.

Die Aufgabe ist mit den Merkmalen des Patentanspruchs 1 gelöst.

Erfindungsgemäß weist eine Ausblas-Kassette einen Rahmen, der eine Tragstruktur bildet, auf, der zudem mit einem offenen Boden versehen ist. Zwischen der Bodenlinie und bevorzugt integrierten Käseformen ist ein Hohlraum gebildet, der gut einsehbar und auch gut reinigbar ist. Die Ausblas-Kassette umfasst weiterhin eine Verriegelungseinrichtung zur Ankopplung einer Glocke zum Einblasen von Luft in die Ausblas-Kassette und in die Käseformen. Der Boden der Ausblas-Kassette ist dazu geeignet, zum Ausblasen von Käselaiben aus Käseformen mit peroriertem Mantel und Boden funktional mit der Glocke gekoppelt zu werden. Hierzu sind Glocke und Ausblas-Kassette mit korrespondierenden Verriegelungseinrichtungen versehen.

Bevorzugte Ausführungsformen sind in den abhängigen Ansprüchen offenbart. Bevorzugt besteht die Kassette resp. deren wesentlichen Bestandteile, wie auch die Käseform, aus einem lebensmittelzugelassenen und korrosionsbeständigem Edelstahl.

Eine in die Ausblas-Kassette integrierte erfindungsgemäße Käseform umfasst bevorzugt ein gelochtes Form Mantelblech und einen gelochten Boden sowie bevorzugt einen größer gelochten, oberen, Randbereich.

Der Bodenbereich der Ausblas-Kassette ist bevorzugt mittels eines, die Ausblas-Kassette umhüllenden Mantelblechs 12 gebildet, so dass ein Abstand zwischen dem Form Mantel der Käseform und dem Mantelblech im Bodenbereich hergestellt ist.

Die Ausblas-Kassette ist weiterhin geeignet, am Boden mit einer Ausblasglocke gekoppelt und vorzugsweise formschlüssig verriegelt zu werden. Hierzu wird die Kassette nach dem Abpressen der Käsemasse vorgängig aus der Käsepresse entnommen und gedreht.

Die Erfindung wird nachfolgend in einem Ausführungsbeispiel anhand einer Zeichnung näher beschrieben. In der Zeichnung zeigen die
Fig. 1: eine erfindungsgemäße Kassette mit eckigen Käseformen;
Fig. 2: eine erfindungsgemäße Kassette mit runden Käseformen;

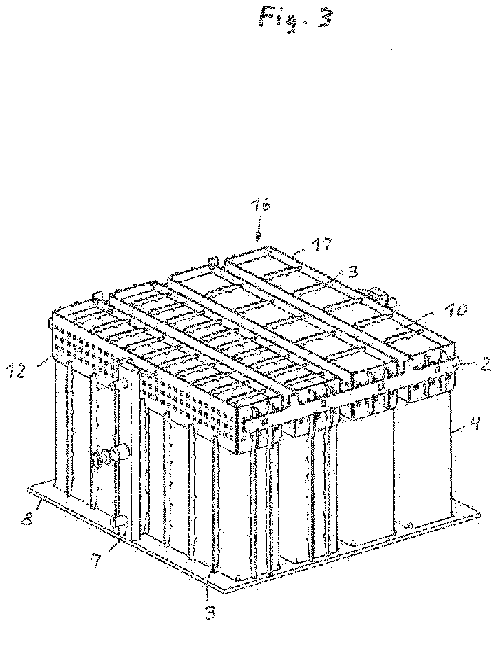

Fig. 3: eine Bodenansicht einer Kassette nach Fig. 1;

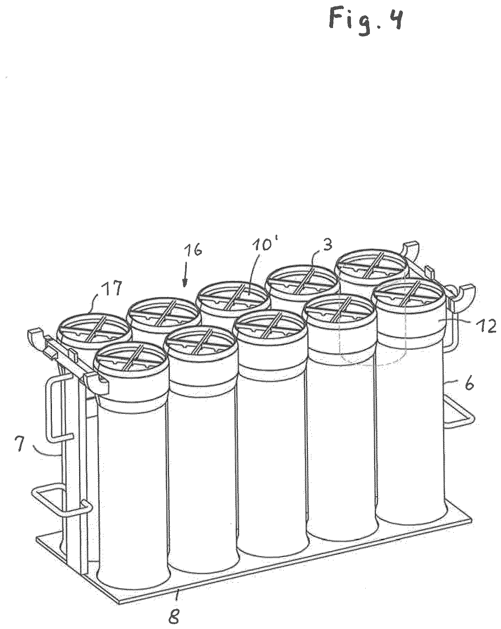

Fig. 4: eine Bodenansicht einer Kassette nach Fig. 2;

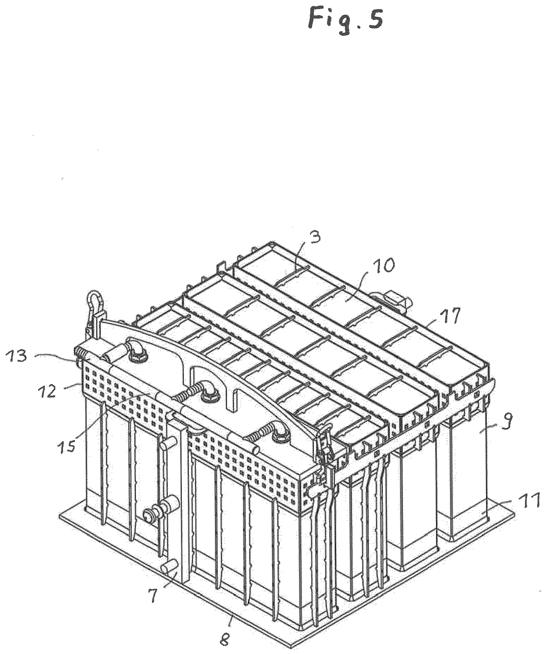

Fig. 5: eine Kassette nach Fig. 3 mit einer aufgesetzten Glocke;

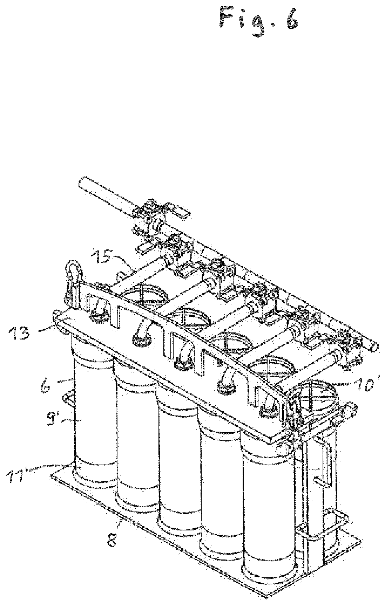

Fig. 6: eine Kassette nach Fig. 4 mit einer aufgesetzten Glocke;

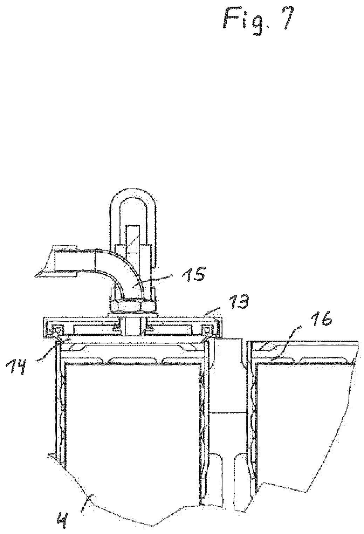

Fig. 7: eine Kassette nach Fig. 5 im Schnitt und

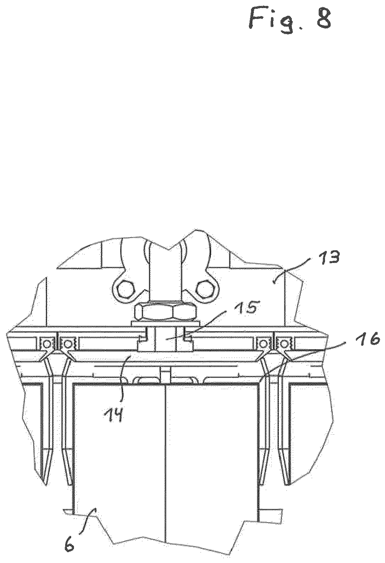

Fig. 8: eine Kassette nach Fig. 6 im Schnitt.

Eine erfindungsgemäße Ausblas-Kassette 1 (im weiteren auch Kassette genannt) kann zum Beispiel in einer Kassettenpresse (nicht dargestellt) gemäß EP 2710888 A1 der Anmelderin verwendet werden, wobei in bekannter Weise mehrere Kassetten 1 in der Wanne einer solchen Kassettenpresse angeordnet sein können.

Die Kassette 1 basiert in der Grundform auf derjenigen, welche in EP 2 710 889 A1 offenbart ist. Im Wesentlichen umfasst sie mehrere, im Querschnitt eckige oder runde integrierte Käseformen 4, 6, aus perforiertem Blech aus Edelstahl (zum Beispiel Conidur^{™}), und einer umhüllenden Rahmen- und Rippenstruktur, welche ihr die nötige Stabilität verleiht.

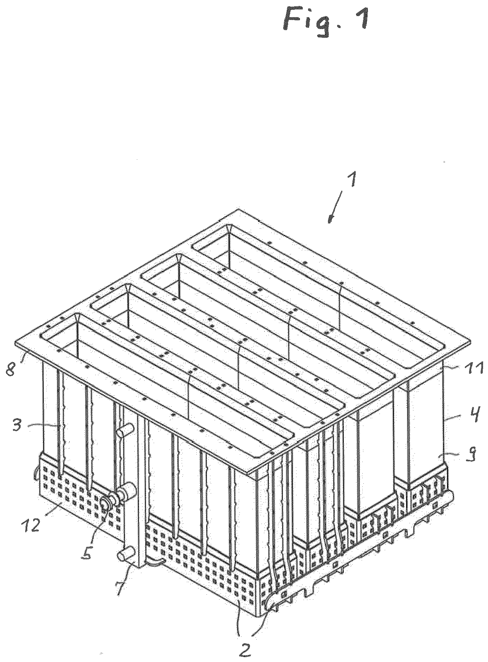

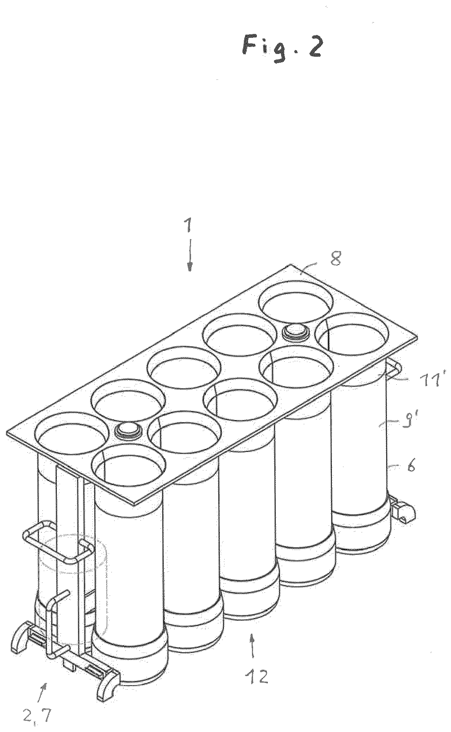

Die Kassette 1 umfasst einen Rahmen 2 mit Rippen 3 aus Edelstahl, im Beispiel als eine geschweißte Tragstruktur (Fig. 1, 2). An den Schmalseiten der Kassette 1 sind, in Verlängerung einer Drehachse der Kassette 1, an einem Riegel 7 Zapfen 5 für Greifer einer, nicht dargestellten, Verfahr- und Wendevorrichtung der Kassettenpresse angebracht.

Der Rahmen 2 umfasst weiterhin ein, mit Öffnungen versehenes Deckblech 8 aus Edelstahl auf der Oberseite des Rahmens 2 auf.

Die Käseformen 4, 6 umfassen ein Form Mantelblech 9, 9' und einen Boden 10, 10' aus Lochblech sowie einen grösser (gröber) gelochten, oberen, Randbereich 11, 11'.

Im Gegensatz zu bisherigen Ausblaskassetten, bei denen der ganze Bodenbereich mit einer Pfanne geschlossen ist, weist die erfindungsgemässe Ausblas-Kassette 1 nur ein Mantelblech 12 am Boden auf, mit einem Abstand von ca. 5mm zum Formmantel der Ausblaskassette 1, und mit der Höhe abgestimmt auf die Käsehöhe in der Käseform 4, 6.

Der so komplett offene Boden der Ausblaskassette 1 hat den grossen Vorteil, dass der Zwischenraum 16 zwischen Käseform 4, 6 und Mantelblech 12 sowie die komplette Bodenpartie der Käseform einsehbar ist und gut gereinigt werden kann. Hygienische Anforderungen sind dadurch besser gewährleistet.

Insgesamt ist die Rahmenstruktur im Beispiel aus dem Rahmen 2, den Rippen 3, Riegel 7 und Mantelblech 12 gebildet.

Damit nun aber der fertig gepresste Käse (Rohkäse) mit Überdruck aus der Form ausgetrieben werden kann, wird nach Entnahme der Kassette 1 aus der Wanne und Wenden der Kassette 1 eine Ausblasglocke 13 auf den Boden zumindest einer Käseform 4, 6, im Beispiel einer ganzen Reihe von Käseformen 4, 6 aufgesetzt. Die Ausblasglocke 13 enthält eine umlaufende Dichtung 14, welche die Ausblasglocke 13 zum Rand des Mantelblechs 12 dicht abschliessen. Zusätzlich wird die Ausblasglocke 13 beim Aufsetzen auf die Kassette 1 automatisch formschlüssig verriegelt.

Nach der Verriegelung kann Luft durch einen Kanal 15 der Ausglasglocke 13 eingeblasen werden, so dass sich der Käse (Rohkäse) von den Innenwänden der Käseform 4, 6 löst. Anschliessend wird die Luftzufuhr unterbrochen, die Käseform 4, 6 bzw. die Kassette 1 angehoben, verfahren und gedreht und nachfolgend wieder in die Wanne der Kassettenpresse eingesetzt.

### Bezugszeichenliste

- 1: Ausblas-Kassette
- 2: Rahmen
- 3: Rippe
- 4: Käseform, eckig
- 5: Zapfen
- 6: Käseform, rund
- 7: Riegel
- 8: Deckblech
- 9: Form Mantelblech
- 9: Form Mantelblech
- 10: Boden
- 10': Boden
- 11: Randbereich
- 11': Randbereich
- 12: Mantelblech
- 13: Ausblasglocke
- 14: Dichtung
- 15: Kanal
- 16: Zwischenraum
- 17: Rand

## Patentansprüche

1. Ausblas-Kassette für Käseformen, wobei die Ausblas-Kassette (1) bevorzugt zur Anordnung in einer Käsepresse geeignet ist, wobei sie eine Tragstruktur aufweisen kann, sie selbst und/oder die Käseformen (4, 6) ein perforiertes Form Mantelblech (9, 9') und einen perforierten Boden (10, 10') aufweisen **dadurch gekennzeichnet, dass** die Ausblas-Kassette (1) mit einem offenen Boden versehen ist.

2. Ausblas-Kassette nach Anspruch 1, **dadurch gekennzeic**hnet, dass der offene Boden mittels eines Mantelblechs (12) gebildet ist, so dass ein Abstand zwischen dem Boden (10. 10') der Käseform (4, 6) und einem unteren Rand (17) des Bodenblechs (12) hergestellt ist.

3. Ausblas-Kassette nach Anspruch 1 oder 2, **dadurch gekennzeichnet, dass** die Käseformen (4, 6) in die Ausblas-Kassette (1) integriert sind.

4. Ausblas-Kassette nach einem der Ansprüche 1 bis 3, **dadurch gekennzeichnet, dass** sie geeignet ist, am Boden mit einer Ausblasglocke (13) gekoppelt und verriegelt zu werden.
